# EUROPEAN PATENT APPLICATION

(11) **EP 4 106 367 A1**
(43) Date of publication of application: **21.12.2022**
(21) Application number: 20919265.7
(22) Date of filing: 10.02.2020
(51) Int. Cl.: H04W 4/90, H04W 84/10

(54) **TERMINAL**

(71) Applicant: NTT DOCOMO, INC., Chiyoda-Ku Tokyo 100-6150 (JP)
(72) Inventor: TAKAHASHI Hideaki, Tokyo 100-6150 (JP); MIN Tianyang, Tokyo 100-6150 (JP)
(74) Representative: Hoffmann Eitle
(86) International application number: PCT/JP2020/005159
(87) International publication number: WO 2021/161389

(57) **Abstract**

A UE (200) executes camping in a non-suitable cell that is included in a non-public mobile communication network in a state of being configured to an access mode with respect to the non-public mobile communication network different from a public mobile communication network, and is not a suitable cell that satisfies a condition. The UE (200) receives emergency information via the non-suitable cell.

## Description

### Technical Field

The present disclosure relates to a terminal that can access a Non-Public Network (NPN).

### Background Art

The 3rd Generation Partnership Project (3GPP) specifies Long Term Evolution (LTE), and with the aim of further speeding of LTE, has also specified LTE-Advanced (hereinafter, referred to as LTE including the LTE-Advanced), and the 5th generation mobile communication system (also called 5G, New Radio (NR), or Next Generation(NG)).

NR defines a technology for providing ultra-reliable and low latency communications (URLLC).

In order to provide such URLLC more reliably, a study has been conducted regarding the use of a dedicated mobile communication network (non-public mobile communication network) called Non-Public Network (NPN) instead of a public mobile communication network (PLMN: Public Land Mobile Network) (Non Patent Literature 1).

NPN includes stand-alone NPN (SNPN) operated by an NPN operator without depending on a network function provided by PLMN and NPN (which will be appropriately referred to as non-SNPN for convenience) deployed by the support of PLMN.

In addition, even in SNPN, a study has been conducted regarding broadcasting of emergency Information (which may be called emergency notification) using the Earthquake and Tsunami Warning System (ETWS) or the Commercial Mobile Alert System (CMAS) similarly to PLMN.

### Citation List

### Non Patent Literature

Non Patent Literature 1: "Private Network Support for NG-RAN", RP-191563, 3GPP TSG RAN Meeting #84, 3GPP, June 2019
Non Patent Literature 2: 3GPP TS 22.261 V16.8.0, 3rd Generation Partnership Project; Technical Specification Group Services and System Aspects; Service requirements for the 5G system; Stage 1 (Release 16), 3GPP, June 2019
Non Patent Literature 3: "CMAS/ETWS and emergency services for SNPNs", R2-1916345, 3GPP TSG-RAN WG2 Meeting #108, 3GPP, November 2019

### Summary of Invention

A terminal in a state of being accessible to SNPN, specifically, a state of being configured to an SNPN access mode (User Equipment, UE, hereinafter, referred to as SNPN access mode UE as appropriate) is assumed to be used in mission-critical areas such as factory robots, assembly machine, and IoT (Internet of Things) devices.

Therefore, it is considered that automatic emergency stop of a system can be implemented by broadcasting emergency information by ETWS/CMAS to the SNPN access mode UE.

Therefore, the following disclosure has been made in view of such a situation, and aims to provide a terminal that can reliably acquire emergency information even in a state of being accessible to a stand-alone NPN (SNPN).

One aspect of the present disclosure is a terminal (UE 200) including: a control unit (camping control unit 230) that executes camping in a non-suitable cell that is included in a non-public mobile communication network in a state of being configured to an access mode with respect to the non-public mobile communication network different from a public mobile communication network, satisfies a condition, and is not a suitable cell; and a receiving unit (radio receiving unit 220) that receives emergency information via the non-suitable cell.

One aspect of the present disclosure is a terminal (UE 200) including: a control unit (camping control unit 230) that executes camping in a public cell included in a public mobile communication network in a state of being configured to an access mode with respect to a non-public mobile communication network different from the public mobile communication network; and a receiving unit (radio receiving unit 220) that receives emergency information via the public cell.

### Brief Description of Drawings

Fig. 1 is an overall schematic configuration diagram of a radio communication system 10.
Fig. 2 is a functional block configuration diagram of a UE 200.
Fig. 3 is a view illustrating a schematic communication sequence related to reception of emergency information by ETWS/CMAS.
Fig. 4 is a view illustrating a camping operation flow (Operation Example 1) of the UE 200.
Fig. 5 is a view illustrating a camping operation flow (Operation Example 2) of the UE 200.
Fig. 6 is a view illustrating a camping operation flow (Operation Example 3) of the UE 200.
Fig. 7 is a view illustrating a camping operation flow (Operation Example 4) of the UE 200.
Fig. 8 is a view illustrating a camping operation flow (Operation Example 5) of the UE 200.
Fig. 9 is a diagram illustrating an example of a hardware configuration of the UE 200.

### Description of Embodiments

Hereinafter, an embodiment will be described with reference to the drawings. Note that the same functions and configurations are denoted by the same or similar reference signs, and the description thereof will be omitted as appropriate.

### (1) Overall schematic configuration of radio communication system

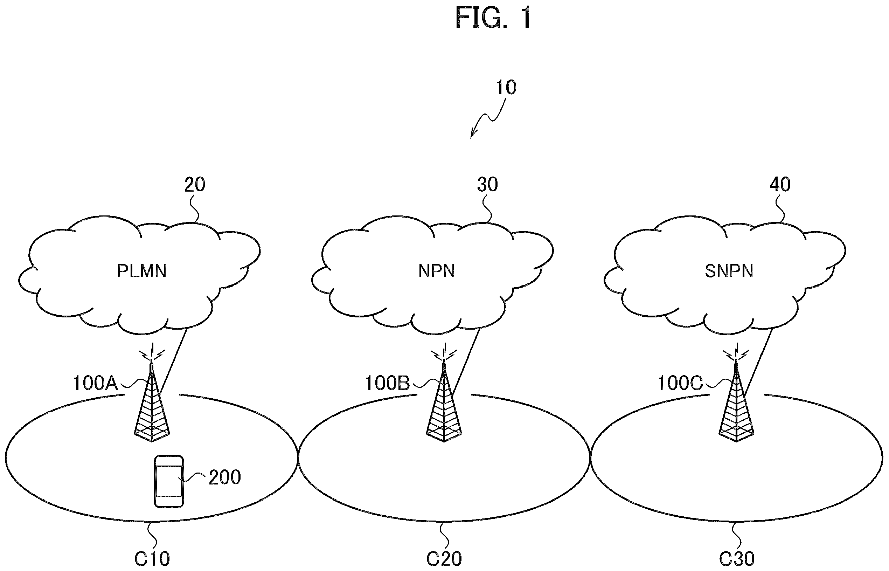

Fig. 1 is an overall schematic configuration diagram of a radio communication system 10 according to the present embodiment. The radio communication system 10 is a radio communication system according to 5G New Radio (NR).

The radio communication system 10 may include a plurality of mobile communication networks. Specifically, the radio communication system 10 includes a public land mobile network 20 (hereinafter, PLMN 20), a non-public network 30 (hereinafter, NPN 30), and a stand-alone non-public network 40 (hereinafter, SNPN 40).

The PLMN 20 may be called a public mobile communication network, a mobile communication network, a public land mobile network, and the like, and the PLMN 20 includes the NPN 30 and a radio base station 100A (hereinafter, gNB 100A). In addition, the PLMN 20 may be interpreted as an operator (telecommunications carrier) that provides service using the PLMN 20.

The gNB 100A is a 5G (NR)-compliant radio base station, and is capable of executing 5G-compliant radio communication with a user terminal 200 (User Equipment 200, hereinafter, UE 200).

The NPN 30 may be called a non-public mobile communication network, a non-public network, a dedicated network, and the like, and the NPN 30 includes a radio base station 100B (hereinafter, gNB 100B).

The NPN 30 may be intended for the single use by a private entity such as a company and can be deployed in a variety of configurations utilizing both virtual elements and physical elements. Specifically, the NPN 30 may be hosted by the PLMN 20 or provided as a slice of the PLMN 20. Note that NPN may be called a Closed Access Group (CAG) or a Closed Subscriber Group (CSG).

The SNPN 40 is a type of NPN. In the present embodiment, the SNPN 40 may be deployed as a completely stand-alone network separate from the PLMN 20. That is, the SNPN 40 may be operated by a private entity different from the operator of the PLMN 20. On the other hand, the NPN 30 may be operated by the operator of the PLMN 20 as described above. The SNPN 40 includes a radio base station 100C (hereinafter, gNB 100C).

In this manner, the radio communication system 10 (5G system) may support the non-public network (NPN) and may support an NPN that provides coverage within a particular geographical area. The 5G system can support both physical and virtual NPNs and can support the stand-alone operation of NPN. On the other hand, the 5G system may provide access to subscribed PLMN service via NPN, or access to selected NPN service via PLMN.

In addition, the radio communication system 10 (5G system) also supports a mechanism for the UE 200 to identify and select NPN. The UE 200 can also access the NPN 30 and the SNPN 40.

The NPN (including SNPN) can satisfy higher Quality of Service (QoS) and security requirements than PLMN. In addition, NPN can implement isolation from other networks as one mode of protection against problems in public networks including PLMN, and there may be a case where such isolation is desirable from the viewpoint of performance, security, privacy, and safety.

In the present embodiment, the mobile communication network including the PLMN 20, and the NPN 30 and the SNPN 40 different from the PLMN 20 may be simply expressed as a network. That is, the network may include the PLMN 20, the NPN 30, and the SNPN 40.

NPN may be interpreted as a network intended for the non-public use. In addition, a private network may be interpreted as an independent network that does not interact with the public network (which may include PLMN).

The gNB 100A forms a PLMN cell C10. The gNB 100B forms an NPN cell C20. The gNB 100C forms an SNPN cell C30.

In addition, even in the NPN 30 and the SNPN 40, broadcasting of emergency Information (which may be called emergency notification) using the Earthquake and Tsunami Warning System (ETWS) or the Commercial Mobile Alert System (CMAS) may be performed similarly to PLMN.

In the present embodiment, the UE 200 in the state of being configured to an access mode with respect to the SNPN 40 (hereinafter, SNPN access mode UE) may access the NPN 30 or the PLMN 20 and receive the emergency information by ETWS/CMAS.

Note that the SNPN access mode UE may be interpreted as a UE operating in an SNPN access mode, is not necessarily in the state of being connected (RRC connected) to SNPN in a radio resource control layer (RRC), and may be in an idle (RRC idle) state or an inactive (RRC inactive) state.

In addition, the cells formed by the gNB 100A to the gNB 100C may be classified into any of the following.
- Acceptable cell: A cell in which the UE 200 camps and acquires limited service (may be called a cell that provides the limited service, the same applies hereinafter). The limited service may include broadcasting of emergency information by ETWS/CMAS.
- Suitable cell: A cell that constitutes a selected or registered PLMN or a cell that constitutes a PLMN of an equivalent PLMN list.
- Non-suitable cell: A cell that is included in NPN (including SNPN) and is not a suitable cell. Even in the non-suitable cell, the UE 200 may camp and acquire the limited service.

Barred cell: A cell in which camping is barred by system information as specified by 3GPP TS38.331.

### (2) Functional block configuration of radio communication system

Next, a functional block configuration of the radio communication system 10 will be described. Specifically, a functional block configuration of the UE 200 will be described.

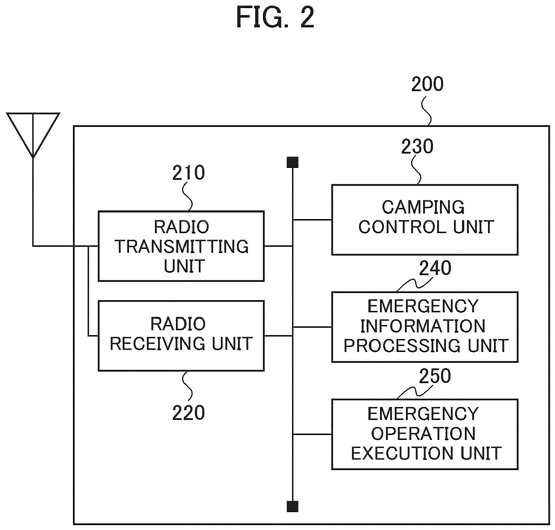

Fig. 2 is the functional block configuration diagram of the UE 200. As illustrated in Fig. 2, the UE 200 includes a radio transmitting unit 210, a radio receiving unit 220, a camping control unit 230, an emergency information processing unit 240, and an emergency operation execution unit 250.

The radio transmitting unit 210 transmits a radio signal according to the 5G specifications. In addition, the radio receiving unit 220 receives a radio signal according to the 5G specifications.

In the present embodiment, the radio receiving unit 220 can receive emergency information by ETWS/CMAS via a non-suitable cell. In the present embodiment, the radio receiving unit 220 constitutes a receiving unit that receives emergency information via an non-suitable cell.

As described above, the non-suitable cell may be included in NPN (including SNPN). In addition, the non-suitable cell may be interpreted as a cell that is not a suitable cell.

In addition, the radio receiving unit 220 can receive emergency information via a public cell, specifically, the PLMN cell C10. In the present embodiment, the radio receiving unit 220 constitutes a receiving unit that receives emergency information via a public cell.

Specifically, the radio receiving unit 220 can receive the emergency information that is transmitted by being included in system information (SIB: System Information Block) via the cell (non-suitable cell or public cell). Note that the radio receiving unit 220, may receive information other than SIB (for example, information using signaling in an upper layer or a lower layer) when the emergency information by ETWS/CMAS has been broadcasted by information other than SIB.

In addition, the radio receiving unit 220 may receive camped cell information indicating a cell in which the UE 200 needs to camp. Specifically, the radio receiving unit 220 can receive SIB including the camped cell information. Note that information other than SIB (for example, information using signaling in an upper layer or a lower layer) may be received when the camped cell information has been broadcasted by information other than SIB, similarly to the emergency information.

The camping control unit 230 controls a cell in which the UE 200 camps. In particular, in the present embodiment, the camping control unit 230 can cause the UE 200 to camp in a non-suitable cell that is included in an NPN different from the PLMN 20, specifically, in the NPN in the state of being configured to the access mode with respect to the NPN 30 or the SNPN 40 (that is, SNPN access mode UE), is not a suitable cell, but satisfies a condition.

Here, the condition may be a condition that the cell is not barred or that cell selection criteria are fulfilled.

That is, the camping control unit 230 may execute camping in the state of being configured to the access mode with respect to the stand-alone non-public mobile communication network, specifically, the SNPN 40. In the present embodiment, the camping control unit 230 constitutes a control unit that executes camping in an non-suitable cell.

In addition, the camping control unit 230 can execute camping in a public cell included in the PLMN 20, specifically, the PLMN cell C10 in the state of being configured to the access mode with respect to the NPN 30 or the SNPN 40. In the present embodiment, the camping control unit 230 constitutes a control unit that executes camping in a public cell.

Note that the camping in the cell may be interpreted as a state where the UE 200 can process an incoming call to the UE 200 in the cell. When receiving paging addressed to the UE 200, the UE 200 may release a camping state and start communication with the network.

The camping control unit 230 may execute camping in the PLMN cell C10 when the emergency information by the ETWS/CMAS has not been broadcasted in the cell included in the NPN 30 or the SNPN 40 or when the cell included in the NPN 30 or the SNPN 40 is not available.

The case where the emergency information has not been broadcasted may include, for example, a case where SIB does not include the emergency information and a case where it is difficult to receive SIB. In addition, the case where the cell included in the NPN 30 or the SNPN 40 is not available may include, for example, a case where it is difficult for the UE 200 to access the cell due to a propagation state of a radio signal and a case where the cell is not operating due to a failure.

In addition, the camping control unit 230 may also execute camping based on the camped cell information received by the radio receiving unit 220. Specifically, the camping control unit 230 can decide a cell in which camping is to be executed in order to receive emergency information by ETWS/CMAS based on the received camped cell information, and execute camping in the decided cell.

The emergency information processing unit 240 executes processing related to emergency information. Specifically, the emergency information processing unit 240 processes emergency information by ETWS/CMAS.

The ETWS may include emergency information such as an earthquake warning provided by the local government or the central government. The emergency information by ETWS may be broadcasted based on cell broadcast service (CBS).

In ETWS, the emergency information may be delivered in the state of being separated into two types of signals of a primary notification that delivers at the fastest speed that is feasible and a secondary notification that delivers supplementary information (seismic intensity, epicenter, and the like). CMAS may also broadcast the same emergency information as ETWS, but other emergency situations other than the earthquake and tsunami (for example, presidential alert, threat alert (tornado/hurricane), child abduction alert, and the like) may be included.

ETWS/CMAS is included in the Public Warning System (PWS) and may be also called PWS.

The emergency operation execution unit 250 executes an emergency operation based on the received emergency information. Specifically, the emergency operation execution unit 250 can display a content of the emergency information on a screen and output an alarm sound.

### (3) Operation of radio communication system

Next, the operation of the radio communication system 10 will be described. Specifically, the camping operation of the UE 200 (SNPN access mode UE) in the state of being configured to the access mode with respect to the SNPN 40 will be described.

### (3.1) Schematic operation

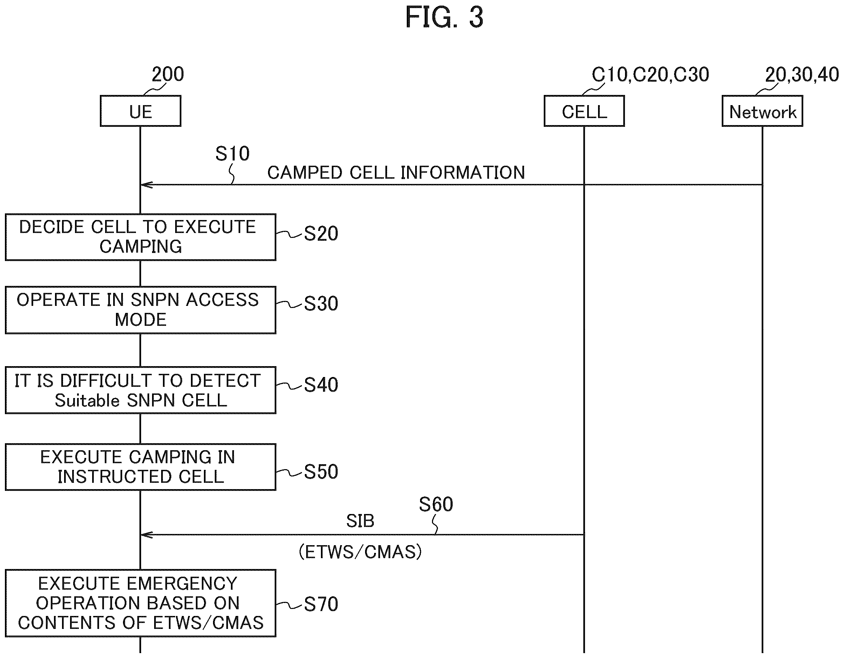

First, an overall schematic operation of the radio communication system 10 including the camping operation of the UE 200 will be described. Fig. 3 illustrates a schematic communication sequence related to reception of emergency information by ETWS/CMAS.

As illustrated in Fig. 3, the network broadcasts the camped cell information to the UE 200 via at least any one of the PLMN cell C10, the NPN cell C20, and the SNPN cell C30 (S10). As described above, the network may include the PLMN 20, the NPN 30, or the SNPN 40.

Specifically, the network can broadcast SIB including the camped cell information via the cell. The camped cell information indicates the cell in which the UE 200 needs to camp as described above.

The UE 200 decides a cell in which camping is to be executed in order to receive the emergency information by the cell ETWS/CMAS to execute camping, based on the received camped cell information (S20).

Note that the processes of S10 and S20 may be omitted if the cell in which the UE 200 needs to camp is uniquely specified in advance as in one of operation examples to be described later.

The UE 200 starts the operation in the SNPN access mode in order to access the SNPN 40 (S30). Specifically, the UE 200 executes radio communication via a suitable cell among NPN cells. The suitable cell may be called a suitable SNPN cell. Here, the UE 200 can execute radio communication in the SNPN 40 via the SNPN cell C30.

In addition, as described above, the SNPN access mode UE may be interpreted as a UE operating in an SNPN access mode, is not necessarily in the state of being connected (RRC connected) to SNPN in RRC, and may be in an idle (RRC idle) state or an inactive (RRC inactive) state.

Note that the application of the UE 200 is not particularly limited, but it is assumed that the UE 200 is used in mission-critical areas such as factory robots, assembly machine, and IoT (Internet of Things) devices.

Next, the UE 200 enters a state where it is difficult to detect the suitable SNPN cell (S40). The state where it is difficult to detect the suitable SNPN cell (SNPN cell C30) may include a state where the quality of a radio signal between the UE 200 and the gNB 100C does not satisfy a condition for camping or connection, a state where the suitable SNPN cell is not formed due to a failure of the gNB 100C, or the like.

In such a case, the UE 200 executes camping in a cell instructed by the camped cell information (S50). For example, the UE 200 can execute camping in the NPN cell C20 included in the NPN 30 or the PLMN cell C10 included in the PLMN 20 based on the camped cell information.

The UE 200 receives SIB including the emergency information by ETWS/CMAS in the cell instructed by the camped cell information (S60). The SIB used for broadcasting the emergency information by the ETWS/CMAS is not particularly limited, but SIB1 and SIB12, for example, may be used as in the existing CMAS.

The UE 200 executes the emergency operation based on a content of the received emergency information by ETWS/CMAS (S70). Specifically, the UE 200 displays the content of the received emergency information on the screen and outputs the alarm sound.

Note that when the state as in S40 described above does not occur and the UE 200 can perform camping in a suitable SNPN cell, the emergency information may be received by ETWS/CMAS via the suitable SNPN cell without changing the camped cell (when the emergency information has been broadcasted in the suitable SNPN cell). When the emergency information has not been broadcasted in the suitable SNPN cell, the camped cell may be changed to another cell (NPN cell C20 or PLMN cell C10) as will be described later.

### (3.2) UE operation flow

Next, a camping operation flow of the UE 200 (SNPN access mode UE) will be described.

### (3.2.1) Operation Example 1

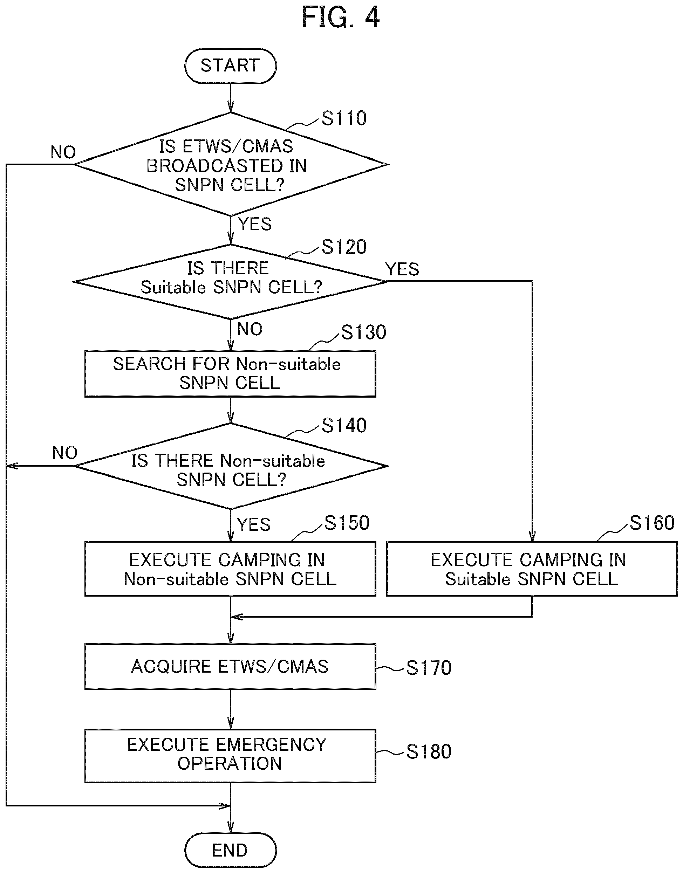

Fig. 4 illustrates a camping operation flow (Operation Example 1) of the UE 200. As illustrated in Fig. 4, the UE 200 determines whether or not emergency information by ETWS/CMAS has been broadcasted in the SNPN cell (S110).

When the emergency information by ETWS/CMAS has been broadcasted in the SNPN cell, the UE 200 determines whether or not there is a suitable SNPN cell (S120). Whether or not there is a suitable SNPN cell may be determined based on whether or not it is possible to secure the radio quality that can be camped in the cell (the same applies hereinafter).

When there is no suitable SNPN cell, the UE 200 searches for a non-suitable SNPN cell (S130) and determines whether or not there is a non-suitable SNPN cell (S140). The non-suitable SNPN cell (non-suitable cell) may be interpreted as a cell that is not a suitable SNPN cell. Although the non-suitable cell is interpreted as the cell that is included in NPN (including SNPN) and is not a suitable cell as described above, the UE 200 can camp and acquire the limited service even in the non-suitable cell. The non-suitable SNPN cell may be interpreted as a type of acceptable cell.

When there is a non-suitable SNPN cell, the UE 200 executes camping in the non-suitable SNPN cell (S150).

In addition, when there is a suitable SNPN cell, the UE 200 executes camping in the suitable SNPN cell (S160). The suitable SNPN cell may be interpreted as an SNPN cell satisfying a predetermined condition for the access by the UE 200.

The UE 200 acquires emergency information by ETWS/CMAS via a camped cell (S170). Specifically, the UE 200 acquires the emergency information included in SIB.

The UE 200 executes an emergency operation based on the acquired emergency information (S180). Specifically, the UE 200 displays the content of the emergency information on the screen and outputs the alarm sound.

In addition, the operation of the UE 200 according to the present operation example may be expressed as follows.

"For UE operating in SNPN Access Mode, if no suitable SNPN cell is available, UE shall camp to a non-suitable SNPN cell as an acceptable cell to obtain limited service (receive ETWS and CMAS notifications)."

### (3.2.2) Operation Example 2

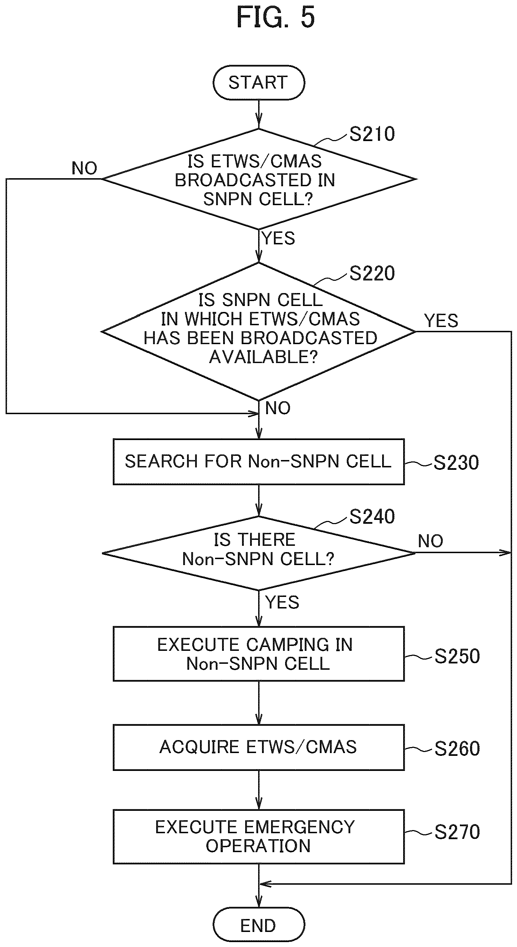

Fig. 5 illustrates a camping operation flow (Operation Example 2) of the UE 200. Hereinafter, the description of the same portions as those in Operation Example 1 will be appropriately omitted.

As illustrated in Fig. 5, the UE 200 determines whether or not emergency information by ETWS/CMAS has been broadcasted in the SNPN cell (S210).

When the emergency information has been broadcast by ETWS/CMAS in the SNPN cell, the UE 200 determines whether or not the SNPN cell in which the emergency information has been broadcast by ETWS/CMAS is available (S220). Specifically, the UE 200 determines whether or not the SNPN cell is in operation and allows camping.

When the SNPN cell is not available or when the emergency information by ETWS/CMAS has not been broadcast in the SNPN cell, the UE 200 searches for a non-SNPN cell (S230) and determines whether there is a non-SNPN cell (S240). The non-SNPN cell may be interpreted as a cell other than the SNPN cell, specifically, an NPN cell (NPN cell C20) or a PLMN cell (PLMN cell C10).

If there is a non-SNPN cell, the UE 200 executes camping in the non-SNPN cell (S250). The processes of S260 and S270 are the same as the processes of S170 and S180 according to Operation Example 1.

In addition, the operation of the UE 200 according to the present operation example may be expressed as follows.

"For UE operating in SNPN Access Mode, if no suitable SNPN cell is available, UE shall camp to a non-SNPN cell as an acceptable cell to obtain limited service (receive ETWS and CMAS notifications)."

### (3.2.3) Operation Example 3

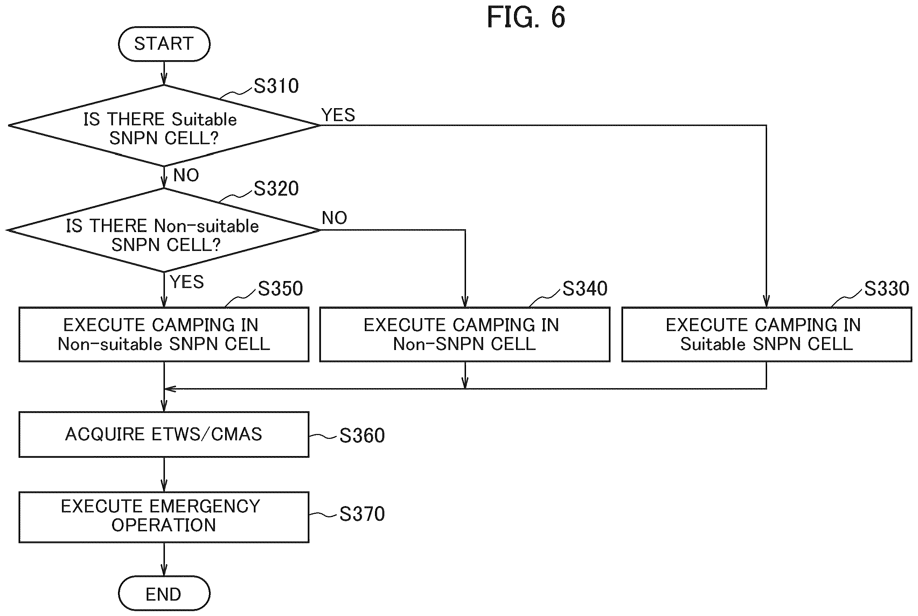

Fig. 6 illustrates a camping operation flow (Operation Example 3) of the UE 200. The present operation example is an operation obtained by combining Operation Example 1 and Operation Example 2. Specifically, the priority order of cells for camping in order to receive emergency information by ETWS/CMAS is defined.

As illustrated in Fig. 6, the UE 200 determines whether or not there is a suitable SNPN cell (S310).

When there is no suitable SNPN cell, the UE 200 determines whether or not there is a non-suitable SNPN cell (S320). Note that the UE 200 may search for the presence/absence of a non-suitable SNPN cell as illustrated in Operation Example 1.

If there is a suitable SNPN cell, the UE 200 executes camping in the suitable SNPN cell (S330).

When there is neither suitable SNPN cell nor non-suitable SNPN cell, the UE 200 executes camping in the non-SNPN cell (S340).

When there is no suitable SNPN cell but there is a non-suitable SNPN cell, the UE 200 executes camping in the non-suitable SNPN cell (S350). The processes of S360 and S370 are the same as the processes of S170 and S180 according to Operation Example 1.

In addition, the operation of the UE 200 according to the present operation example may be expressed as follows.

"For UE operating in SNPN Access Mode, if no suitable SNPN cell is available, UE shall camp to an "acceptable cell" to obtain limited service (receive ETWS and CMAS notifications) with the following rule:
- if a non-suitable SNPN cell is available
- receive ETWS or CMAS notification on SNPN cell (acceptable SNPN cell)
- else (i.e. non-SNPN cell is available)
- receive ETWS or CMAS notification on non-SNPN cell (i.e. PLMN cell or NPN cell)"

### (3.2.4) Operation Example 4

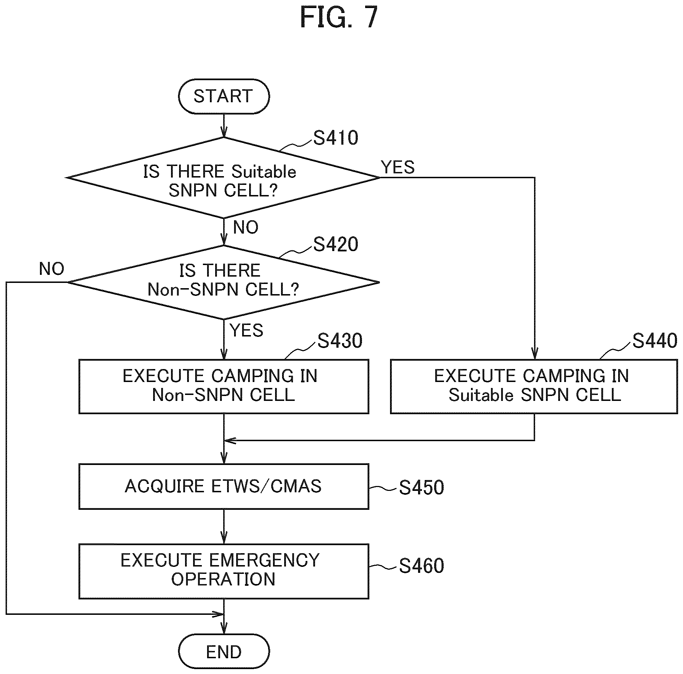

Fig. 7 illustrates a camping operation flow (Operation Example 4) of the UE 200. Even in the present operation example, the priority order of cells for camping in order to receive emergency information by ETWS/CMAS is specified.

As illustrated in Fig. 7, the UE 200 determines whether or not there is a suitable SNPN cell (S410).

When there is no suitable SNPN cell, the UE 200 determines whether or not there is a non-SNPN cell (S420).

If there is a non-SNPN cell, the UE 200 executes camping in the non-SNPN cell (S430).

If there is a suitable SNPN cell, the UE 200 executes camping in the suitable SNPN cell (S440). The processes of S450 and S460 are the same as the processes of S170 and S180 according to Operation Example 1.

In addition, the operation of the UE 200 according to the present operation example may be expressed as follows.

"For UE operating in SNPN Access Mode, if no suitable SNPN cell is available, UE shall camp to an "acceptable cell" to obtain limited service (receive ETWS and CMAS notifications) with the following rule:
- if a non-NPN cell is available
- receive ETWS or CMAS notification on non-NPN cell"

### (3.2.5) Operation Example 5

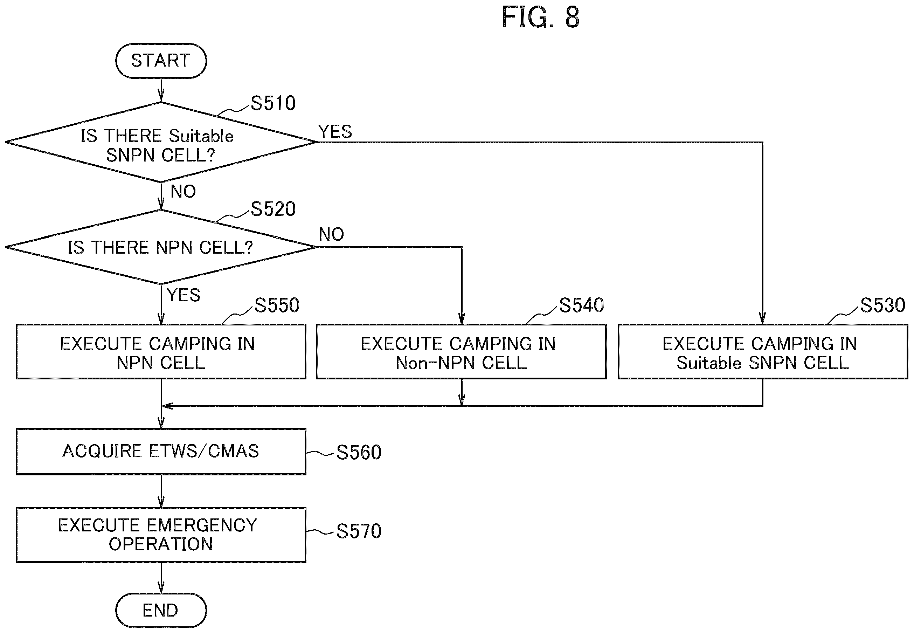

Fig. 8 illustrates a camping operation flow (Operation Example 5) of the UE 200. Even in the present operation example, the priority order of cells for camping in order to receive emergency information by ETWS/CMAS is specified.

As illustrated in Fig. 8, the UE 200 determines whether or not there is a suitable SNPN cell (S510).

When there is no suitable SNPN cell, the UE 200 determines whether or not there is an NPN cell (S520).

If there is a suitable SNPN cell, the UE 200 executes camping in the suitable SNPN cell (S530).

If there is no NPN cell, the UE 200 executes camping in the non-NPN cell (S540). Here, the non-NPN cell may mean a public cell, specifically, the PLMN cell C10.

If there is an NPN cell, the UE 200 executes camping in the NPN cell (S550). The processes of S560 and S570 are the same as the processes of S170 and S180 according to Operation Example 1.

In addition, the operation of the UE 200 according to the present operation example may be expressed as follows.

"For UE operating in SNPN Access Mode, if no suitable SNPN cell is available, UE shall camp to an "acceptable cell" to obtain limited service (receive ETWS and CMAS notifications) with the following rule:
- if an NPN cell is available
- receive ETWS or CMAS notification on NPN cell
- else (i.e. non-NPN cell is available)
- receive ETWS or CMAS notification on non-NPN cell"

In addition, the UE 200 may determine whether or not there is a non-NPN cell in S520 in the present operation example. In this case, the UE 200 may execute camping in the non-NPN cell if there is a non-NPN cell, and may execute camping in the NPN cell if there is no non-NPN cell.

In addition, in this case, the operation of the UE 200 may be expressed as follows.

"For UE operating in SNPN Access Mode, if no suitable SNPN cell is available, UE shall camp to an "acceptable cell" to obtain limited service (receive ETWS and CMAS notifications) with the following rule:
- if a non-NPN cell is available
- receive ETWS or CMAS notification on non-NPN cell
- else (i.e. NPN cell is available)
- receive ETWS or CMAS notification on NPN cell"

### (4) Operation/effect

According to the above-described embodiment, the following operational effects can be obtained. Specifically, the UE 200 can execute camping in the non-suitable cell that is included in NPN in the state of being configured to the access mode with respect to the NPN 30 or the SNPN 40 (that is, SNPN access mode UE), is not the suitable cell, but satisfies the condition. In addition, the UE 200 can receive the emergency information by ETWS/CMAS via the non-suitable cell.

In addition, the UE 200 can execute camping in the PLMN cell C10 included in the PLMN 20 in the state of SNPN access mode UE.

For this reason, the UE 200 operating as the SNPN access mode UE can more reliably acquire the emergency information by ETWS/CMAS even when the UE 200 is used in mission-critical areas such as factory robots, assembly machine, and IoT (Internet of Things) devices.

As a result, it is possible to implement the automatic emergency stop of the system based on the emergency information, and it is possible to minimize the loss caused by the emergency situation such as the earthquake and tsunami.

In the present embodiment, the UE 200 can camp in the PLMN cell C10 when the emergency information by ETWS/CMAS has not been broadcasted in the cell included in the NPN 30 and/or the SNPN 40 or when the cell included in the NPN 30 and/or the SNPN 40 (NPN cell C20, SNPN cell C30) is not available. Therefore, the UE 200 can more reliably acquire the emergency information by ETWS/CMAS.

In the present embodiment, the UE 200 can receive the camped cell information indicating the cell in which the UE 200 needs to camp, and execute camping based on the received camped cell information. Therefore, an appropriate camped cell can be controlled by the network initiative from among various types of cells.

### (5) Other Embodiments

Although the embodiment has been described as above, it is obvious to those skilled in the art that the invention is not limited to the description of the embodiment and various modifications and improvements can be made.

For example, the description has been given in the above embodiment regarding the camping operation of the UE 200 using the terms of the SNPN cell (the suitable SNPN cell or the non-suitable SNPN cell), the non-SNPN cell (NPN cell or PLMN cell), and the NPN cell, but the names of the cells may be appropriately read within the scope of the contents described in the above embodiment. For example, the suitable SNPN cell and the non-suitable SNPN cell may be collectively interpreted as the SNPN cell, and the NPN cell and the PLMN cell may be collectively interpreted as the non-SNPN cell.

Although ETWS/CMAS has been described as an example in the above embodiment, the invention may be applied to other systems that broadcast the same type of emergency information, for example, Korean Public Alert System (KPAS), EU-ALERT, WEA (Wireless Emergency Alerts).

In addition, the block configuration diagrams used for the description of the above embodiment (Fig. 2) illustrates the blocks in units of functions. Those functional blocks (components) can be implemented by a desired combination of at least one of hardware and software. In addition, a method for implementing each functional block is not particularly limited. That is, each functional block may be implemented by one physically or logically coupled device, or may be implemented by directly or indirectly connecting two or more physically or logically separated devices (for example, in a wired or wireless manner), and these plural devices. The functional blocks may be implemented by combining software with the one device or the plural devices described above.

Functions include determining, deciding, judging, calculating, computing, processing, deriving, investigating, searching, ascertaining, receiving, transmitting, output, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that causes transmitting to function is called a transmitting unit or a transmitter. A implementation method for any of the above functions is not particularly limited to any one method as described above.

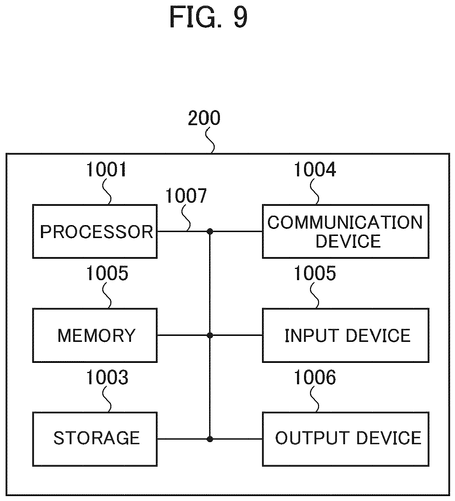

Furthermore, the UE 200 described above can function as a computer that performs the processing of the radio communication method of the present disclosure. Fig. 9 is a diagram illustrating an example of a hardware configuration of the UE 200. As illustrated in Fig. 9, the UE 200 can be configured as a computer device including a processor 1001, a memory 1002, a storage 1003, a communication device 1004, an input device 1005, an output device 1006, a bus 1007, and the like.

Note that the term "device" can be replaced with a circuit, device, unit, and the like in the following explanation. The hardware configuration of the device can be configured to include one or a plurality of the devices illustrated in the drawings, or can be configured by without including some of the devices.

The functional blocks of the UE 200 (see Figs. 2) can be implemented by any of hardware elements of the computer device or a combination of the hardware elements.

Moreover, various functions of the UE 200 are realized by loading a predetermined software (program) on hardware such as the processor 1001 and the memory 1002 to perform operations by the processor 1001, and by controlling communication via the communication device 1004, and controlling reading and/or writing of data on the memory 1002 and the storage 1003.

The processor 1001, for example, operates an operating system to control the entire computer. The processor 1001 can be configured with a central processing unit (CPU) including an interface with a peripheral device, a control device, a computing device, a register, and the like.

In addition, the processor 1001 reads a program (program code), a software module, data, and the like from the storage 1003 and/or the communication device 1004 into the memory 1002, and executes various processes according to the data. As the program, a program that is capable of executing on the computer at least a part of the operation described in the above embodiment is used. Alternatively, various processes described above can be executed by one processor 1001 or can be executed simultaneously or sequentially by two or more processors 1001. The processor 1001 can be implemented using one or more chips. Note that the program can be transmitted from a network via a telecommunication line.

The memory 1002 is a computer-readable recording medium and is configured, for example, using at least one of a read only memory (ROM), an erasable programmable ROM (EPROM), an electrically erasable programmable ROM (EEPROM), a random access memory (RAM), and the like. The memory 1002 can be called a register, a cache, a main memory (main storage device), and the like. The memory 1002 can store therein a program (program codes), software modules, and the like that can execute the method according to the embodiment of the present disclosure.

The storage 1003 is a computer readable recording medium. Examples of the storage 1003 include an optical disk such as a compact disc ROM (CD-ROM), a hard disk drive, a flexible disk, a magneto-optical disk (for example, a compact disk, a digital versatile disk, Blu-ray (registered trademark) disk), a smart card, a flash memory (for example, a card, a stick, a key drive), a floppy (registered trademark) disk, a magnetic strip, and the like. The storage 1003 may be called an auxiliary storage device. The recording medium can be, for example, a database including the memory 1002 and/or the storage 1003, a server, or other appropriate medium.

The communication device 1004 is hardware (transmission/reception device) capable of performing communication between computers via at least one of a wired network and a wireless network. The communication device 1004 is also called, for example, a network device, a network controller, a network card, a communication module, and the like.

The communication device 1004 includes a high-frequency switch, a duplexer, a filter, a frequency synthesizer, and the like in order to implement, for example, at least one of Frequency Division Duplex (FDD) and Time Division Duplex (TDD).

The input device 1005 is an input device (for example, a keyboard, a mouse, a microphone, a switch, a button, a sensor, and the like) that receives input from the outside. The output device 1006 is an output device (for example, a display, a speaker, an LED lamp, and the like) that outputs data to the outside. Note that the input device 1005 and the output device 1006 may be integrated (for example, a touch screen).

In addition, the respective devices, such as the processor 1001 and the memory 1002, are connected to each other with the bus 1007 for communicating information thereamong. The bus 1007 can be configured using a single bus or can be configured using separate buses between the devices.

In addition, the device may be configured to include hardware such as a microprocessor, a digital signal processor (DSP), an application specific integrated circuit (ASIC), a programmable logic device (PLD), and a field programmable gate array (FPGA) . Some or all of the functional blocks may be implemented by the hardware. For example, the processor 1001 may be implemented by using at least one of these kinds of hardware.

In addition, notification of information is not limited to that described in the above aspect/embodiment, and may be performed using a different method. For example, the notification of information may be performed by physical layer signaling (for example, downlink control information (DCI), uplink control information (UCI), upper layer signaling (for example, RRC signaling, medium access control (MAC) signaling, notification information (master information block (MIB), system information block (SIB)), other signals, or a combination of these. In addition, the RRC signaling may be called an RRC message, for example, or can be an RRC connection setup message, an RRC connection reconfiguration message, or the like.

Each of the aspects/embodiments described in the present disclosure can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a system using any other appropriate system, and a next-generation system that is expanded based on these. In addition, a plurality of systems may be combined (for example, a combination of at least one of the LTE and the LTE-A with the 5G).

As long as there is no inconsistency, the order of processing procedures, sequences, flowcharts, and the like of each of the aspects/embodiments described in the present disclosure may be exchanged. For example, the various steps and the sequence of the steps of the methods described above are exemplary and are not limited to the specific order described above.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above description, the example in which there is one network node other than the base station has been described; however, a combination of a plurality of other network nodes (for example, MME and S-GW) may be used.

Information and signals (information and the like) can be output from an upper layer (or lower layer) to a lower layer (or upper layer). The information may be input and output via a plurality of network nodes.

The input/output information can be stored in a specific location (for example, a memory) or can be managed in a management table. The information to be input/output can be overwritten, updated, or added. The information can be deleted after outputting. The input information can be transmitted to another device.

The determination may be made using a value (0 or 1) represented by one bit, using Boolean value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, but may be performed implicitly (for example, without notifying the predetermined information).

Regardless of being called software, firmware, middleware, a microcode, a hardware description language, or some other name, the software should be interpreted broadly to mean an instruction, an instruction set, a code, a code segment, a program code, a program, a subprogram, a software module, an application, a software application, a software package, a routine, a subroutine, an object, an executable file, an execution thread, a procedure, a function, and the like.

In addition, software, an instruction, information, and the like may be transmitted and received via a transmission medium. For example, when software is transmitted from a website, a server, or some other remote source using at least one of a wired technology (coaxial cable, optical fiber cable, twisted pair, digital subscriber line (DSL), or the like) and a wireless technology (infrared light, microwave, or the like), at least one of these wired and wireless technologies is included within the definition of the transmission medium.

The information, signals, or the like described above may be represented by using any of a variety of different technologies. For example, data, an instruction, a command, information, a signal, a bit, a symbol, a chip, or the like that can be described throughout the above description may be represented by a voltage, a current, an electromagnetic wave, a magnetic field or a magnetic particle, an optical field or a photon, or a desired combination thereof.

Note that the terms described in the present disclosure and terms necessary for understanding the present disclosure may be replaced by terms having the same or similar meanings. For example, at least one of a channel and a symbol may be a signal (signaling). In addition, the signal may be a message. In addition, a component carrier (Component Carrier: CC) may be called a carrier frequency, a cell, a frequency carrier, or the like.

The terms "system" and "network" used in the present disclosure can be used interchangeably.

In addition, the information, the parameter, and the like described in the present disclosure can be represented by an absolute value, can be expressed as a relative value from a predetermined value, or can be represented by corresponding other information. For example, the radio resource can be instructed by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and/or a base station subsystem that performs communication service in this coverage.

In the present disclosure, the terms "mobile station (Mobile Station: MS)", "user terminal", "user equipment (User Equipment: UE)", "terminal", and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like), a moving body that moves unmanned (for example, a drone, an automatically driven vehicle, or the like), a robot (manned type or unmanned type). Note that at least one of a base station and a mobile station can be a device that does not necessarily move during the communication operation. For example, at least one of a base station and a mobile station may be an Internet of Things (IoT) device such as a sensor.

In addition, a base station in the present disclosure may be read as a mobile station (user terminal, hereinafter the same). For example, each of the aspects/embodiments of the present disclosure may be applied to a configuration that allows communication between a base station and a mobile station to be replaced with communication among a plurality of mobile stations (for example, may be called Device-to-Device (D2D), Vehicle-to-Everything (V2X), or the like). In this case, the mobile station may have the function of the base station. In addition, the terms "uplink", "downlink" and the like may also be replaced with terms corresponding to inter-terminal communication (for example, "side"). For example, terms such as an uplink channel, and a downlink channel may be read as a side channel.

Likewise, a mobile station in the present disclosure may be read as a base station. In this case, the base station may have the function of the mobile station.

A radio frame may be constituted by one or a plurality of frames in a time domain. The one frame or each frame of the plurality of frames in the time domain may be called a subframe.

A subframe may also be constituted by one or a plurality of slots in the time domain. The subframe may have a fixed time length (for example, 1 ms) that does not depend on numerology.

The numerology may be a communication parameter applied to at least one of transmission and reception of a certain signal or channel. The numerology may represent at least one of, for example, a subcarrier spacing (SCS), a bandwidth, a symbol length, a cyclic prefix length, a transmission time interval (TTI), the number of symbols per TTI, a radio frame configuration, a specific filtering process performed by the transceiver in the frequency domain, a specific windowing process performed by the transceiver in the time domain, and the like.

The slot may be constituted by one or a plurality of symbols (such as orthogonal frequency division multiplexing (OFDM)) symbols and single carrier frequency division multiple access (SC-FDMA) symbols) in the time domain. The slot may be a time unit based on the numerology.

The slot may include a plurality of mini-slots. Each mini-slot may be constituted by one or a plurality of symbols in the time domain. In addition, the mini-slot may also be called a sub-slot. The mini-slot may be constituted by fewer symbols than the slot. PDSCH (or PUSCH) transmitted in a time unit greater than the mini-slot may be called PDSCH (or PUSCH) mapping type A. The PDSCH (or PUSCH) transmitted using the mini-slot may be called PDSCH (or PUSCH) mapping type B.

All of the radio frame, the subframe, the slot, the mini-slot, and the symbol represent a time unit at the time of transmitting a signal. All of the radio frame, the subframe, the slot, the mini-slot, and the symbol may have different names corresponding to them.

For example, one subframe may be called a transmission time interval (TTI), a plurality of consecutive subframes may be called TTI, and one slot or one mini-slot may be called TTI. That is, at least one of the subframe and TTI may be a subframe (1 ms) in the existing LTE, may be a period shorter than 1 ms (for example, 1 to 13 symbols), or may be longer than 1 ms. Note that the unit representing TTI may be called a slot, a mini-slot, and the like instead of a subframe.

Here, TTI refers to, for example, a minimum time unit of scheduling in radio communication. For example, in the LTE system, the base station performs scheduling to allocate radio resources (frequency bandwidths, transmission power, and the like that can be used by each user terminal) to each user terminal in units of TTI. Note that the definition of TTI is not limited thereto.

TTI may be a transmission time unit such as a channel-encoded data packet (transport block), a code block, and a codeword, and may be a processing unit such as scheduling and link adaptation. Note that, when TTI is given, a time interval (for example, the number of symbols) at which a transport block, a code block, a codeword, and the like are actually mapped may be shorter than the TTI.

Note that, when one slot or one mini-slot is called TTI, one or more TTIs (that is, one or more slots or one or more mini-slots) may be the minimum time unit for scheduling. In addition, the number of slots (the number of mini-slots) constituting the minimum time unit of the scheduling may be controlled.

TTI having a time length of 1 ms may be called a general TTI (TTI in LTE Rel. 8-12), a normal TTI, a long TTI, a general subframe, a normal subframe, a long subframe, a slot, and the like. The TTI shorter than the general TTI may be called a shortened TTI, a short TTI, a partial TTI (partial or fractional TTI), a shortened subframe, a short subframe, a mini-slot, a sub-slot, a slot, and the like.

Note that a long TTI (for example, a general TTI, a subframe, and the like) may be replaced with TTI having a time length exceeding 1 ms, and a short TTI (for example, a shortened TTI) may be read as a TTI having a TTI length that is shorter than the long TTI and 1 ms or more.

A resource block (RB) is a resource allocation unit in the time domain and the frequency domain, and may include one or a plurality of consecutive subcarriers in the frequency domain. The number of subcarriers included in the RB may be the same regardless of the numerology, and may be twelve, for example. The number of subcarriers included in RB may be decided based on the numerology.

In addition, a time domain of RB may include one or a plurality of symbols, and may be one slot, one mini-slot, one subframe, or one TTI in length. One TTI, one subframe, and the like may be constituted by one or a plurality of resource blocks.

Note that one or a plurality of RBs may be called a physical resource block (Physical RB: PRB), a sub-carrier group (SCG), a resource element group (REG), a PRB pair, an RB pair, and the like.

In addition, the resource block may be constituted by one or a plurality of resource elements (RE). For example, one RE may be a radio resource area of one subcarrier and one symbol.

A bandwidth part (BWP) (may also be called a partial bandwidth) may represent a subset of consecutive common RBs (common resource blocks) for a certain numerology in a certain carrier. Here, the common RB may be specified by an index of RB based on a common reference point of the carrier. The PRB may be defined in a BWP and numbered within the BWP.

The BWP may include a BWP for UL (UL BWP) and a BWP for DL (DL BWP). For UE, one or more BWPs may be configured in one carrier.

At least one of the configured BWPs may be active, and UE does not necessarily assume transmission/reception of a predetermined signal/channel outside the active BWP. Note that "cell", "carrier", and the like in the present disclosure may be read as "BWP".

The structures of the radio frame, the subframe, the slot, the mini-slot, the symbol, and the like described above are merely examples. For example, the configurations such as the number of subframes included in the radio frame, the number of slots per subframe or radio frame, the number of mini-slots included in the slot, the number of symbols and RBs included in the slot or mini-slot, the number of subcarriers included in the RB, the number of symbols in the TTI, the symbol length, and the cyclic prefix (CP) length can be variously changed.

The terms "connected", "coupled", or any variations thereof, mean any direct or indirect connection or coupling between two or more elements. In addition, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using at least one of one or more wires, cables, printed electrical connections, and as some non-limiting and non-exhaustive examples, by using electromagnetic energy having wavelengths in the radio frequency domain, the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on".

The "means" in the configuration of each of the above devices may be replaced with "unit", "circuit", "device", and the like.

Any reference to an element using a designation such as "first", "second", and the like used in the present disclosure generally does not limit the amount or order of those elements. Such designations can be used in the present disclosure as a convenient method to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

In the present disclosure, for example, during translation, if articles such as "a", "an", and "the" in English are added, in the present disclosure, these articles shall include plurality of nouns following these articles.

The terms "determining" and "determining" used in the present disclosure sometimes encompass a wide variety of operations. For example, "determining" and "deciding" can include judging, calculating, computing, processing, deriving, investigating, looking up, search, or inquiry (for example, search in a table, a database, or another data structure), and ascertaining which are considered as "determining" or "deciding". In addition, "determining" and "deciding" can include receiving (for example, receiving information), transmitting (for example, transmitting information), "input", "output", and "accessing" (for example, accessing data in a memory) which are considered as "determining" or "deciding". In addition, "determining" and "deciding" can include resolving, selecting, choosing, establishing, and comparing which are considered as "determining" or "deciding". That is, the "determining" and "deciding" can include any operation considered as "determining" or "deciding". In addition, "determining (deciding)" may be read as "assuming", "expecting", "considering", and the like.

In the present disclosure, the term "A and B are different" may mean "A and B are different from each other". Note that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### Reference Signs List

10 Radio communication system
20 PLMN
30 NPN
40 SNPN
100A, 100B, 100C gNB
200 UE
210 Radio transmitting unit
220 Radio receiving unit
230 Camping control unit
240 Emergency Information processing unit
250 Emergency operation execution unit
C10 PLMN cell
C20 NPN cell
C30 SNPN cell
1001 Processor
1002 Memory
1003 Storage
1004 Communication device
1005 Input device
1006 Output device
1007 Bus

## Claims

1. A terminal comprising:
a control unit that executes camping in a non-suitable cell that is included in a non-public mobile communication network in a state of being configured to an access mode with respect to the non-public mobile communication network different from a public mobile communication network, is not a suitable cell, but satisfies a condition; and
a receiving unit that receives emergency information via the non-suitable cell.

2. A terminal comprising:
a control unit that executes camping in a public cell included in a public mobile communication network in a state of being configured to an access mode with respect to a non-public mobile communication network different from the public mobile communication network; and
a receiving unit that receives emergency information via the public cell.

3. The terminal according to claim 2, wherein the control unit executes camping in the public cell when the emergency information is not broadcasted in a cell included in the non-public mobile communication network or when the cell included in the non-public mobile communication network is not available.

4. The terminal according to claim 1 or 2, wherein the control unit executes the camping in a state of being configured to an access mode with respect to the non-public mobile communication network of a stand-alone type.

5. The terminal according to claim 1 or 2, wherein
the receiving unit receives camped cell information indicating a cell in which the terminal needs to camp, and
the control unit executes the camping based on the received camped cell information.
